# EUROPEAN PATENT APPLICATION

(11) **EP 4 618 362 A1**
(43) Date of publication of application: **17.09.2025**
(21) Application number: 24163864.2
(22) Date of filing: 15.03.2024
(51) Int. Cl.: H02J 7/00

(54) **ACTIVE BALANCING OF ENERGY STORAGE PREFERABLY AT MODULE AND RACK LEVEL**

(71) Applicant: Hitachi Energy Ltd, 8050 Zürich (CH)
(72) Inventor: BAI, Haofeng, 723 48 Västerås (SE); ASOODAR, Mohsen, 164 56 Stockholm (SE); BORMANN, Dierk, 723 53 Västerås (SE); AUGUSTIN, Tim, 723 59 Västerås (SE); SALINAS, Ener, 722 10 Västerås (SE); ZHANG, Hongyang, 115 24 Stockholm (SE)
(74) Representative: Vossius & Partner Patentanwälte Rechtsanwälte mbB

(57) **Abstract**

The invention provides an energy storage unit comprising: a plurality of energy storage sub-units connected in series; and at least one converter connected on a first side to one or more of the plurality of energy storage sub-units and connected on a second side to a bus; wherein the bus extends in a first direction and the plurality of energy storage sub-units are arranged in alternating polarity orientation in a second direction different to the first direction.

## Description

The present disclosure relates to an energy storage unit and a method for providing an energy storage unit.

For grid connected energy storage (ES) units, the effective capacity is lower than the actual installed capacity due to the imbalance among the battery / supercapacitor modules (energy storage sub-units). Ideally, all energy storage sub-units should have the same property and the installed capacity is the same as the effective capacity. However, due to parameter tolerances and different load current distributions, perfect load distribution without an additional balancing circuit is not possible. As a result, over-dimensioning is needed, and the system (ES unit) cost is increased significantly. A good balancing circuit is the key to reduce the over-dimension and system cost and increasing effective system capacity.

For some energy storage units, the energy storage sub-units may be purchased from external suppliers. Such energy storage sub-units should also be integrated into an energy storage unit with some kind of balancing circuit and/or balancing method. As a system integrator, energy storage unitsshould have the capability to do module level balancing to reduce the system cost, while being independent from suppliers to secure safe supply change management and low purchase price.

Energy storage units for balancing energy may need a lot of space.

The above-mentioned disadvantages are at least partly overcome and/or above-mentioned advantages are at least partly achieved with the features of the independent claims. Dependent claims define preferred embodiments of the disclosure.

The present disclosure relates to an energy storage unit comprising: a plurality of energy storage sub-units connected in series; and at least one converter connected on a first side to one or more of the plurality of energy storage sub-units and connected on a second side to a bus; wherein the bus extends in a first direction and the plurality of energy storage sub-units are arranged in alternating polarity orientation in a second direction different to the first direction.

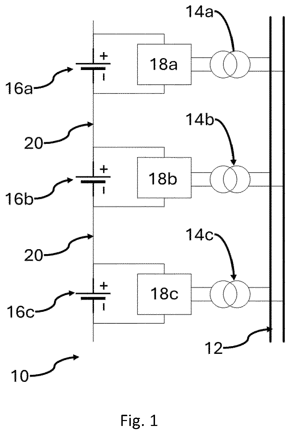

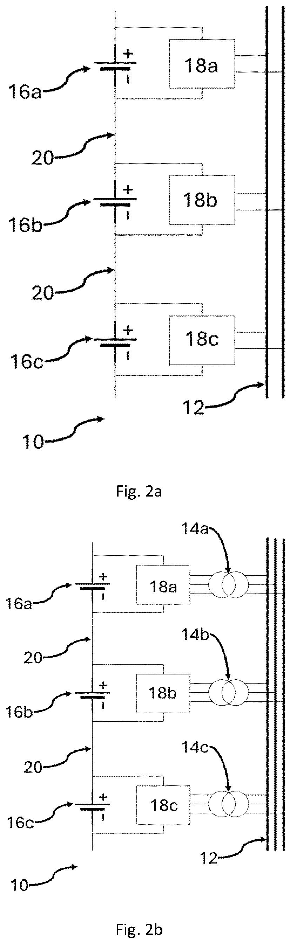

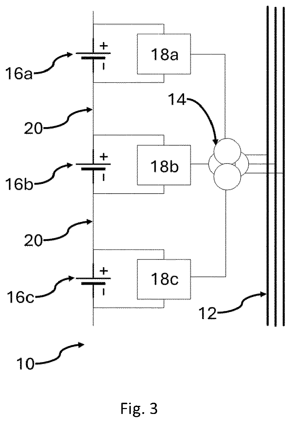

There are two pairs of connections coming from each of the plurality of energy storage sub-units. First, the connections for the series connection of the plurality of energy storage sub-units (string). Second, each of the plurality of energy storage sub-units is connected to the at least one converter. The second connection may be a connection in parallel. This second connection may also be a connection to a same coupling point. The coupling point may be one converter (like a transformer with more than two windings, as for example shown in fig. 3) and/or the coupling point may be a bus (as for example shown in figs. 1, 2a and 2b). Preferably, each energy storage sub-unit has two poles (connections). Both pairs of connections are connected to both poles. This means that the two different connections are also coupled to each other.

The second connection may be via more than one converter (of the at least one converter) at a bus, or may be to one converter (like a transformer with more than two windings, as for example shown in fig. 3), or in a different manner.

Different energy storage sub-units may be similar or different to each other. This may concern each of the criteria like capacity, voltage, condition, and so on. Being similar may preferably be in borders of ± 10 %, ± 5 %, or ± 1 %.

The bus may be an electrical conductor, like a cable. The bus may have one or more phases. The bus may be a high frequency (HV) AC bus. The bus may be connected to other energy storage sub-unit strings. The at least one converter may be chosen to provide a voltage on the bus side to allow for a thin cable as the bus. The bus may further be connected to an auxiliary power supply. The bus extending in a first direction may be straight over the length of the at least one converter and/or over the length of the plurality of energy storage sub-units.

The orientation of the plurality of energy storage sub-units, arranged in alternating polarity orientation in the second direction, may be parallel and anti-parallel to the second direction. In this manner, (any) two adjacent energy storage sub-units may be arranged in that the positive (/high voltage/first) pole of a first energy storage sub-unit is besides the negative (/low voltage/second) pole of a second energy storage sub-unit, and the negative pole of the first energy storage sub-unit is besides the positive pole of the second energy storage sub-unit. Only one set of poles besides each other is connected: either the positive pole of the first energy storage sub-unit is connected to the negative pole of the second energy storage sub-unit, or the negative pole of the first energy storage sub-unit is connected to the positive pole of the second energy storage sub-unit.

The one or more converters may provide galvanic isolation.

The disclosed arrangement can save space. It is compact and the implementation is simple. Man-hour cost for installation, maintenance and engineering cost can be reduced. Further, the disclosure can balance the electric load of different energy storage sub-units (via the one or more converter). This can increase effective system capacity and prolong the lifetime of the energy storage sub-units. The system can be made smaller, simple, and with low costs. It is also easier to produce the system or energy storage unit from the plurality of energy storage sub-units, especially when the parts (like energy storage sub-units) are bought as a whole (for example for system integrators). No changes in the parts may be necessary. Especially with active balancing circuits, the balancing can be more powerful and efficient. The power of the converter can be dimensioned based on the need for balancing speed.

Various embodiments may preferably implement the following features.

Preferably, the at least one converter comprises a plurality of converters, wherein each converter of the plurality of converters is connected on a first side to a respective one of the plurality of energy storage sub-units.

In this case, the same coupling point to which the plurality of energy storage sub-units are connected (see "connection to a same coupling point" above) and where the plurality of energy storage sub-units are connected in parallel may be the bus.

With the plurality of converters, multi-phase energy can be provided and/or balanced (for example via a bus). The bus extending in the first direction may pass along the plurality of converters in close proximity to minimize the connection needed.

Preferably, each of the at least one converter comprises a power electric circuit.

Each converter may comprise one or more of an AC-to-DC converter, DC-to-AC converter, a full bridge converter, a three-phase (or more than three phase) converter, a single-phase converter, an isolated DC-to-DC converter, and/or a rectifier with a diode or thyristor. There may be a plurality of converters, each converter between a different one (or more) of energy storage sub-unit(s) and bus. In the case of several energy storage sub-units being connected to one converter, it is preferable to have a converter (preferable similar circuits) between each energy storage sub-unit and the bus. With this, energy conversion is possible. The different converters of the plurality of converters may be similar or different.

Preferably, the power electronics circuit comprises a direct current to alternating current, DC-to-AC, converter.

Preferably, each of the at least one converter comprises a transformer.

Preferably, the transformer is connected to the bus by an alternating current to direct current, AC-to-DC, converter.

The AC-to-DC converter may be connected between the corresponding energy storage sub-unit and the bus.

Preferably, the bus is configured for alternating current, AC.

Alternatively, the bus may be configured for direct current, DC.

Preferably, the at least one converter is connected to the bus in parallel.

Preferably, the second direction is orthogonal to the first direction. This can make the energy storage unit more compact.

Preferably, the at least one converter is located inbetween the bus and the plurality of energy storage sub-units in a third direction which is orthogonal to the first direction and the second direction. This can make the energy storage unit more compact.

Preferably, each of the plurality of energy storage sub-units is a direct current, DC, energy storage.

Preferably, the energy storage unit is an energy storage module and the plurality of energy storage sub-units is a plurality of energy storage cells. Energy storage cells may be batteries, accumulators, or the like.

Preferably, the energy storage unit is an energy storage rack and the plurality energy storage sub-units is a plurality of energy storage modules.

Preferably, the at least one converter is a multi-phase converter.

There may also be more than one phase connected from each (or some) of the plurality of energy storage sub-units (which may provide more than one phase) to one or different converters.

The present disclosure also relates to a method for providing an energy storage unit. The method comprises: providing a plurality of energy storage sub-units connected in series; providing at least one converter; and connecting the at least one converter on a first side to one or more of the plurality of energy storage sub-units and on a second side to a bus; wherein the bus extends in a first direction and the plurality of energy storage sub-units are arranged in alternating orientation in a second direction different to the first direction.

Preferably, providing at least one converter comprises providing a plurality of converters, wherein each converter of the plurality of converters is connected on a first side to a respective one of the plurality of energy storage sub-units, and wherein preferably each of the plurality of converter comprises a power electric circuit.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows an exemplary energy storage unit with converters and transformers.
Fig. 2a shows an exemplary energy storage unit with converters.
Fig. 2b shows an exemplary energy storage unit with a 3-phase AC bus and multiple multi-phase transformers.
Fig. 3 shows an exemplary energy storage unit with one multi-winding transformer.
Fig. 4 shows a physical setup of an exemplary energy storage unit.
Figs. 5a and 5b show converter; and fig. 5c shows a three-phase diode rectifier.
Fig. 6 shows a system of two connected energy storage units.
Fig. 7 represents a method for providing an energy storage unit.

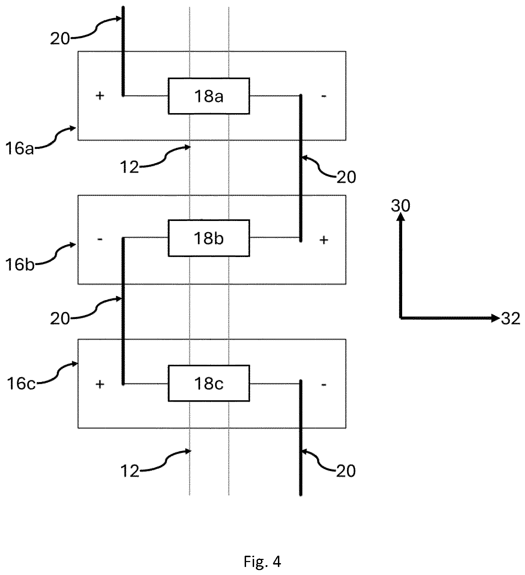

Figs. 1 to 3 show possible wirings of exemplary energy storage units 10, while fig. 4 shows an exemplary physical setup (geometric arrangement) of an energy storage unit 10.

Fig. 1 shows an exemplary energy storage unit 10 with converters 18 (18a, 18b and 18c) and transformers 14 (14a, 14b and 14c). The transformer 14 may be comprised by the (corresponding) converter 18. The energy storage unit 10 further comprises a plurality of energy storage sub-units 16 (16a, 16b and 16c). The energy storage sub-units 16 are connected in series at connection 20. The energy storage sub-units 16 are also connected together in parallel via the plurality of converters 18 and transformers 14 and the bus 12 (which also may be comprised by the energy storage unit 10).

In this figure, three energy storage sub-units 16, three converters 18 and three transformers 14 are shown as plurality. It is alternatively possible to have two or more energy storage sub-units 16, two or more converters 18, and two or more transformers 14 connected in this manner (as plurality). The load of the energy storage sub-units 16 can be balanced via the transformers 14 and the bus 12. In this figure, the transformers 14, the converters 18 and the bus 12 are for two-phased. More (three or more) or less (single) phase(s) are alternatively possible. The converters 18 are preferably DC-to-AC converters. The energy storage sub-units 16 are preferably DC energy storage sub-units. Each of the converters 18 may also/alternatively comprise several parts (as for example one or more of a DC-to-AC converter, AC-to-DC converter, a full bridge converter, a three-phase (or more than three phase) converter, a single-phase converter, an isolated DC-to-DC converter, a power electronics circuit, and/or a rectifier with a diode or thyristor). The transformers 14a to 14c have preferably two windings (one connected to the respective energy storage sub-unit 16 and the other connected to the bus 12).

There may be additional converters between the transformers 14 and the bus 12. These additional converters may comprise one or more of DC-to-AC converter, AC-to-DC converter, a full bridge converter, a three-phase (or more than three phase) converter, a single-phase converter, an isolated DC-to-DC converter, a power electronics circuit, and/or a rectifier with a diode or thyristor.

The bus 12 may be an electrical conductor, like a cable. The bus 12 may have one or more phases. The bus 12 may be a high frequency (HV) AC bus. The bus 12 may be connected to otherenergy storage sub-unit strings. The transformers 14 (and converters 18) may be chosen to provide a voltage on the bus side to allow for a thin cable as the bus 12. The bus 12 may further be connected to an auxiliary power supply.

This setup may be put together from its parts (energy storage sub-units 16, transformers 14, etc.) in an easy and cost effective manner. The parts may have been provided (bought) as whole. Then the parts may have been put together in the manner as disclosed.

Fig. 2a shows an exemplary energy storage unit 10 with converters 18. As many parts in fig. 2a are the same or similar as in fig. 1 and these parts shall not again be described at this point, reference to fig. 1 is made herewith. The differences between fig. 1 and fig. 2a are described.

Compared to fig. 1, the energy storage unit 10 of fig. 2a does not comprise transformers 14. The converters 18 preferably also provide galvanic isolation.

Fig. 2b shows an exemplary energy storage unit with a 3-phase AC bus and multiple multi-phase transformers. Fig. 2b shows an exemplary energy storage unit 10 with converters 18. As many parts in fig. 2b are the same or similar as in fig. 1 and these parts shall not again be described at this point, reference to fig. 1 is made herewith. The differences between fig. 1 and fig. 2b are described.

The wiring in fig. 2b are three phases (between converters 18 and transformers 14, between transformers 14 and bus 12, and the bus 12). In this figure, (connections at) the transformers 14 and the bus 12 are for multi-phase (in this case three phases). More (four or more) or less (single ortwo) phase(s) are alternatively possible. The transformers 14a to 14c have preferably two sets of windings (one set connected to the respective energy storage sub-unit 16 and the other set connected to the bus 12). Each set is shown to have three windings (according to three phases). More or less windings are possible (preferably according to the number of phases). Preferably the number of windings of the two sets is the same.

Fig. 3 shows an exemplary energy storage unit 10 with one multi-winding transformer 14 (as the one or more transformers 14). As many parts in fig. 3 are the same or similar as in fig. 2b and these parts shall not again be described at this point, reference to fig. 2b is made herewith. The differences between fig. 3 and fig. 2b are described.

The transformer 14 of fig. 3 is a multi-phase transformer with more than two windings. The shown transformer 14 has six windings - three connected to the respective three phases of the bus 12, and each of the other three windings connected to a different energy storage sub-unit 16. Alternatively, different numbers of windings are possible. Preferably, the number of windings connected to the bus is equal to the number of phases of the bus (or may be double the number of windings connected to the energy storage sub-units 16 or another multiple of it). From each energy storage sub-unit 16 (maybe via the corresponding converter 18), more than one phase may be connected to the transformer 14. In this case, each phase may be connected to a different winding of the transformer 14. The total number of windings connected to the energy storage sub-units 16 may be the total number of phases over the plurality of energy storage sub-units 16. When the number of phases from each energy storage sub-unit 16 is the same, the number of windings connected to the energy storage sub-unit 16 may be the number of energy storage sub-units 16 multiplied by the number of phases from each energy storage sub-unit 16. The transformer 14 may be chosen to provide a voltage on the bus side to allow for a thin cable as the bus 12.

Fig. 4 shows a physical setup of an exemplary energy storage unit 10. This may represent the physical setup (geometric arrangement) of any described energy storage unit 10 of this disclosure.

The shown energy storage unit 10 comprises a plurality of energy storage sub-units 16 connected in series. This connection in series is implemented by alternating polarity orientation in a second direction 32 of the plurality of energy storage sub-units 16 (seen at the + and - signs for the poles of the energy storage sub-units 16). In this manner, (any) two adjacent energy storage sub-units 16 may be arranged such that the positive pole (may alternatively be a high voltage/first pole) of a first energy storage sub-unit 16a (or 16b) is besides/adjacent the negative pole (alternatively low voltage/second pole) of a second energy storage sub-unit 16b (16c respectively), and the negative pole of the first energy storage sub-unit 16a (or 16b) is besides the positive pole of the second energy storage sub-unit 16b (or 16c). Only one set of poles besides each other is connected by connection 20: either the positive pole of the first energy storage sub-unit is connected to the negative pole of the second energy storage sub-unit, or the negative pole of the first energy storage sub-unit is connected to the positive pole of the second energy storage sub-unit.

The energy storage unit 10 further comprises converters 18. Each converter may comprise a transformer and/or other converter types as described in this disclosure. Preferably, the converters 18 are arranged over (in a third direction orthogonal to a first direction 30 and the second direction 32, the third direction pointing out of the figure) the energy storage sub-units 16. The converters 18 may be aligned in a straight line in the first direction 30. In the case of one converter 18 for a plurality of energy storage sub-units 16 (as for example shown in fig. 3), the one converter 18 may be arranged centrally over the corresponding plurality of energy storage sub-units 16. This exemplary arrangement may be that only converter 18b of fig. 4 is present, while converters 18a and 18c are not present. The remaining converter 18b may be connected to the energy storage sub-units 16a, 16b and 16c. The remaining converter 18b may be positioned at the shown position as in fig. 4.

The energy storage unit 10 also comprises a bus 12. The bus 12 may be aligned along the converters 18, thus the bus extending in the first direction 30. The first direction 30 and the second direction 32 may be orthogonal to each other (and to the third direction).

The geometric arrangement (physical setup) may have several alternative solutions. For example, the converters 18 and the bus 12 may be positioned on the side (towards the second direction 32) of the energy storage sub-units 16 (instead of above). Alternative arrangements may provide for easy installation and maintenance.

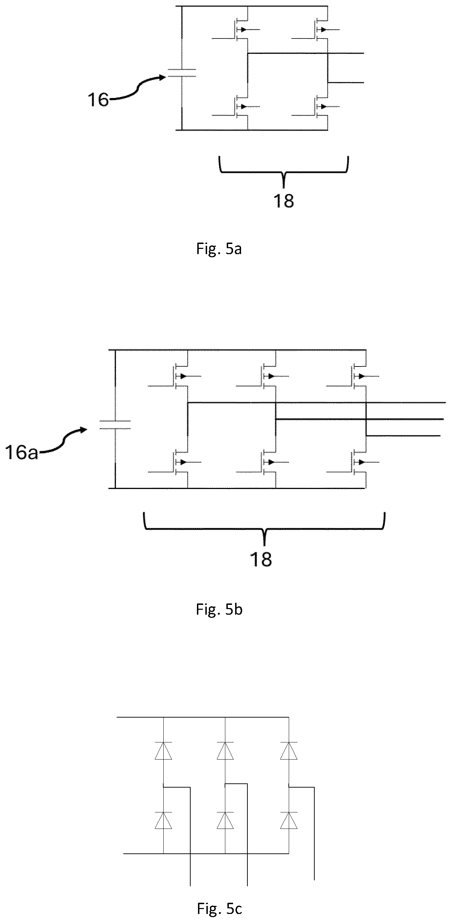

Figs. 5a and 5b show converters; and fig. 5c shows a three-phase diode rectifier.

Fig. 5a shows an energy source (possibly an energy storage sub-unit 16) and a full bridge single phase inverter based on MOSFET (as an example for the converter 18). The system shown in fig. 5a may be an example of an energy storage sub-unit 16 with converter 18 (or for each of the plurality of these parts) as shown in the previous figures. The fundamental of an AC bus can be selected to minimize the volume and cost of the transformer. Due to the nature of single phase voltage and current, there may be 2nd order harmonics on the DC side and filter capacitor might be further included to reduce the effect of the harmonics to the lifetime of the energy storage sub-unit.

Fig. 5b shows an energy source (possibly an energy storage sub-unit 16) and a full bridge three phase inverter based on MOSFET (as an example for the converter 18). The system shown in fig. 5b may be an example of an energy storage sub-unit 16 with converter 18 (or for each of the plurality of these parts) as shown in the previous figures. Fig. 5b is similar to fig. 5a. However, to reduce the capacitance of the filter capacitor, the AC frequency can be increased or the three phase converter of fig. 5b can be used. The voltage rating of the MOSFET is determined by the energy storage sub-unit.

Both single-phase inverter and 3-phase inverter are widely available, and cost is low. R&D cost can be minimized, and multiple suppliers can secure the safety of the supply chain.

Fig. 5c shows an exemplary three phase diode rectifier. This may be an example of (a part of) the converter 18, or the additional converters between the transformers 14 and the bus 12.

When rectifier, with diode or thyristor are used, the balancing may be working in such a way that minimum voltage of the modules is limited by the AC bus

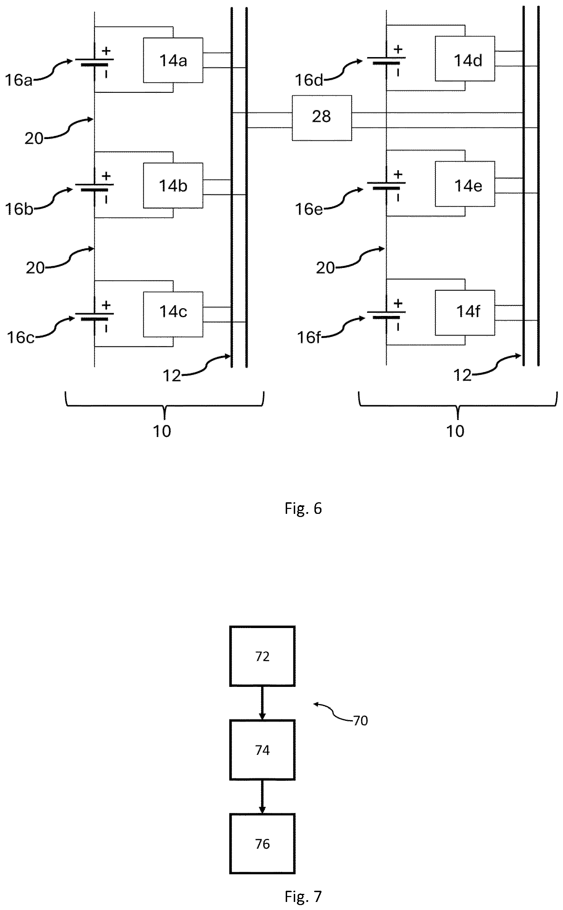

Fig. 6 shows a system of two connected energy storage units.

Fig. 6 shows a system of two connected energy storage units 10. Each of the two energy storage units 10 may be any energy storage unit 10 as described in this disclosure. The system further comprises a link 28 (may be a parallel connection). The link 28 may be an electric connection. The link 28 may be made of the same parts (/material) as the bus 12. This link 28 enables energy exchange between the two energy storage units 10. The transformers 14 may further comprise converter (like converter 18).

In the case of fig. 6, it is possible that the energy storage sub-units 16 are energy storage cells, the two energy storage systems 10 are energy storage modules and the system is an energy storage rack. Alternatively, the energy storage sub-units 16 may be energy storage modules, the energy storage units 10 may be energy storage racks and the entire system is a combination of the racks. More than two energy storage units 10 may be connected using the link 28 or several links 28.

Each of the two energy storage units 10 may be setup as shown in fig. 4, and/or as described in this disclosure.

Fig. 7 represents a method 70 for providing an energy storage unit. The method 70 for providing an energy storage unit comprises several step. In step 72 a plurality of energy storage sub-units connected in series is provided. In step 74 at least one converter is provided.

In step 76 the at least one converter is connected on a first side to one or more of the plurality of energy storage sub-units and on a second side to a bus. The bus extends in a first direction and the plurality of energy storage sub-units are arranged in alternating orientation in a second direction different to the first direction.

Further, step 74 of providing at least one converter comprises providing a plurality of converters, wherein each converter of the plurality of converters is connected on a first side to a respective one of the plurality of energy storage sub-units, and wherein preferably each of the plurality of converter comprises a power electric circuit.

The described energy storage units 10 (and the system of fig. 6) may be AC or DC microgrids. Their control may be based on SoC and/or SoH of the energy storage sub-units 16.

The described energy storage units 10 (described throughout the disclosure) may comprise 200 W to 1000 W single phase inverter. These can be compact enough to take the balancing task.

In an alternative, the described energy storage units 10 (described throughout the disclosure) may comprise inverters with one or more of the following requirements:
- Power rating: 200 W - 1 kW (up to the application).
- Insulation level: < 1.5 kV DC.
- AC frequency: 50 Hz - 10 kHz (up to the detailed design at PD phase).
- AC voltage: 110 V - 1000 V AC peak (up to the detailed design at PD phase).
- DC voltage: module voltage 50 V - 200 V DC (up to the application).
- Cooling: force air or natural cooling.
- Isolation of the transformer primary to secondary: 1.5 kV DC or 1 kV AC rms.
- Transformer frequency: same as the AC frequency.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. An energy storage unit (10) comprising:
a plurality of energy storage sub-units (16) connected in series; and
at least one converter connected on a first side to one or more of the plurality of energy storage sub-units and connected on a second side to a bus (12);
wherein the bus (12) extends in a first direction (30) and the plurality of energy storage sub-units (16) are arranged in alternating polarity orientation in a second direction different to the first direction (30).

2. Energy storage unit (10) according to claim 1, wherein the at least one converter (18) comprises a plurality of converters (18), wherein each converter (18) of the plurality of converters (18) is connected on a first side to a respective one of the plurality of energy storage sub-units (16).

3. Energy storage unit (10) according to claim 1 or 2, wherein each of the at least one converter (18) comprises a power electric circuit.

4. Energy storage unit (10) according to claim 3, wherein the power electronics circuit comprises a direct current to alternating current, DC-to-AC, converter (18).

5. Energy storage unit (10) according to any one of claims 1 to 4, wherein each of the at least one converter (18) comprises a transformer (14).

6. Energy storage unit (10) according to claim 5, wherein the transformer (14) is connected to the bus (12) by an alternating current to direct current, AC-to-DC, converter (18).

7. Energy storage unit (10) according to any one of claims 1 to 5, wherein the bus (12) is configured for alternating current, AC.

8. Energy storage unit (10) according to any one of claims 1 to 7, wherein the at least one converter is connected to the bus (12) in parallel.

9. Energy storage unit (10) according to any one of claims 1 to 8, wherein the second direction (32) is orthogonal to the first direction (30).

10. Energy storage unit (10) according to any one of claims 1 to 9, wherein the at least one converter (18) is located inbetween the bus (12) and the plurality of energy storage sub-units (16) in a third direction which is orthogonal to the first direction (30) and the second direction (32).

11. Energy storage unit (10) according to any one of claims 1 to 10, wherein each of the plurality of energy storage sub-units (16) is a direct current, DC, energy storage.

12. Energy storage unit (10) according to any one of claims 1 to 11, wherein the energy storage unit (10) is an energy storage module and the plurality of energy storage sub-units (16) is a plurality of energy storage cells; or
wherein the energy storage unit (10) is an energy storage rack and the plurality energy storage sub-units is a plurality of energy storage modules.

13. Energy storage unit (10) according to any one of claims 1 to 12, wherein the at least one converter (18) is a multi-phase converter.

14. Method (70) for providing an energy storage unit (10) comprising:
Providing (72) a plurality of energy storage sub-units (16) connected in series;
Providing (74) at least one converter (18); and
Connecting (76) the at least one converter (18) on a first side to one or more of the plurality of energy storage sub-units (16) and on a second side to a bus (12);
wherein the bus (12) extends in a first direction (30) and the plurality of energy storage sub-units (16) are arranged in alternating orientation in a second direction different to the first direction (30).

15. Method (70) according to claim 14, wherein providing (74) at least one converter (18) comprises providing a plurality (18) of converters (18), wherein each converter (18) of the plurality (18) of converters (18) is connected on a first side to a respective one of the plurality of energy storage sub-units (16), and wherein preferably each of the plurality of converter (18) comprises a power electric circuit.
